# EUROPÄISCHE PATENTSCHRIFT

(11) **EP 0 758 828 B1**
(45) Veröffentlichungstag und Bekanntmachung des Hinweises auf die Patenterteilung: **21.12.2005**
(21) Anmeldenummer: 96112547.3
(22) Anmeldetag: 02.08.1996
(51) Int. Cl.: H04M 3/42, H04Q 3/545

(54) **Verfahren zur Verbesserung der Betriebsweise eines programmgesteuerten Kommunikationssystems**
Method for improving the operation of a program controlled communication system
Méthode pour améliorer le fonctionnement d'un système de communication à commande programmée

(30) Priorität: 16.08.1995 DE 19530129
(43) Veröffentlichungstag der Anmeldung: 19.02.1997
(73) Patentinhaber: SIEMENS AKTIENGESELLSCHAFT, 80333 München (DE)
(72) Erfinder: Lindemann, Werner, Dipl.-Ing., 45473 Mühlheim (DE)

(56) Entgegenhaltungen:
- EP-A- 0 460 405
- US-A- 3 867 582
- US-A- 4 893 335
- US-A- 5 012 511
- US-A- 5 452 347

## Beschreibung

Die Erfindung betrifft ein Verfahren zur Verbesserung der Betriebsweise eines programmgesteuerten Kommunikationssystems, wobei die Systemsteuerung aus wenigstens einem Systemprozessor und einem Systemspeicher besteht, der u.a. für die im Kommunikationssystem ablaufenden vermittlungstechnischen Prozeduren Modulkomponenten zur Steuerung von Endgerätefunktionen sowie zur Steuerung von Leistungsmerkmalsfunktionen aufweist und zur Speicherung für anschlußbezogene Informationen dient, wobei die am jeweils angeschlossenen Kommunikationsendgerät durch den Benutzer eingegebenen Informationen der Systemsteuerung übermittelt werden und diese daraufhin die Ausführung des jeweiligen Prozedurablaufes veranlaßt.

Neben den einem Verbindungsaufbau und Verbindungsabbau zwischen einem Kommunikationsendgerät und dem Kommunikationssystem zuzuordnenden Prozedurabläufen werden auch weitere Prozedurabläufe, wie sie beispielsweist die Inanspruchnahme von Teilnehmerleistungsmerkmalen bedingen, mit Hilfe einer bestimmten Signalisierungsprozedur gesteuert. In modern konzipierten digitalen Kommunikationssystemen ist man bestrebt, neben der Bereitstellung einer Vielzahl von Leistungsmerkmalen - die auch von der Art und dem Funktionsumfang der verwendeten Endgeräte abhängig sind - auch die von den Benutzern durchzuführenden Prozeduren zu vereinfachen. So ist es beispielsweise möglich, jeweils einen bestimmten Funktionsablauf bzw. einen bestimmten Prozedurablauf durch die Betätigung einer hierfür vorgesehenen Taste zu aktivieren. Ist an das Kommunikationssystem auch eine Datenverarbeitungseinrichtung angeschlossen, so können für den Datenverkehr zwischen der zentralen Steuerrechnereinheit des Kommunikationssystems und der Datenverarbeitungseinrichtung verschiedene Datendienste eingerichtet sein. Damit wird es möglich, mit unterschiedlichen zentralen Einrichtungen des Kommunikationssystems zu kommunizieren, z.B. Kommandos zu übergeben und Daten zu übernehmen. Neben anderen Datenkanal-Leistungsmerkmalen ist in diesem Zusammenhang auch der Datendienst "gesteuerter Verbindungsaufbau" bekannt. Damit ist es der Datenverarbeitungseinrichtung möglich, über den Datenkanal mittels entsprechender Programme Verbindungen zwischen internen oder zwischen internen und externen Terminals herzustellen.

Die Druckschrift US 3,867,582 Weed at al. "Remote control for private automatic branch telephone exchange" zeigt eine Anordnung, mit der ein Benutzer eines Kommunikationssystems ausgehend von einem externen Kommunikationsendgerät Leistungsmerkmale und Funktionen des Kommunikationssystems nutzt. Dabei kann der Benutzer des externen Kommunikationsendgerätes beispielsweise auf kostengünstige Amtsleitungen des Kommunikationssystems zugreifen, auf ein Sprachspeichersystem zugreifen oder andere Funktionen des Kommunikationssystems nutzen. Dazu authorisiert sich der Benutzer nach Anwahl des Kommunikationssystems mit Eingabe einer Benutzeridentifikation und bekommt dann über sein Kommunikationsendgerät einen Wählton zugeteilt.

Es ist die Aufgabe der Erfindung insbesondere im Zusammenhang mit der Ausführung von Aufgaben für ein anderes Endgerät die Betriebsweise zu verbessern. Diese Aufgabe wird durch die kennzeichnenden Merkmale des Patentanspruches 1 gelöst.

Der wesentliche Aspekt der Erfindung liegt darin, verbindungsaufbau- und/oder leistungsmerkmalsrelevante Prozedurabläufe an einer zweiten Endeinrichtung dadurch zu starten, daß die betreffenden Eingaben an einer ersten Endeinrichtung erfolgen. Das Resultat ist das gleiche, als seien die Eingaben zur Aktivierung der Prozedurabläufe unmittelbar am zweiten Endgerät selbst vorgenommen worden. Dies erfolgt nicht über einen Eintrag im Kundendatenspeicher sondern ohne feste Konfigurierung durch eine bestimmte Informationseingabe des Benutzers des ersten Kommunikationsendgerätes. Damit wird dieses temporär in einen Sonderbetriebsmodus geschaltet, der jederzeit gestartet und wieder beendet werden kann. Es kann also z.B. von einem Fernsprechendgerät aus variabel für ein anderes Fernsprechendgerät gewählt werden, dessen Wahltastatur beispielsweise nicht bedient zu werden braucht. Von einem solchen ersten Endgerät aus wird nicht nur eine gehende Wahl ermöglicht, sondern es können auch z.B. im Zusammenhang mit der Initiierung von Leistungsmerkmalen Prozeduren für ein z.B. durch die Einwahl seiner internen Rufnummer bestimmtes anderes Endgerät ausgeführt werden. Die bestimmte Informationseingabe für den vorgesehenen Einstieg in diesen "Fernsteuerungsmodus" erfolgt beispielsweise über eine entsprechend vorgegebene Aktivierungskennzahl oder durch die Betätigung einer mit dieser Kennzahl unterlegten Funktionstaste am ersten Endgerät. Das "fernzusteuernde" Endgerät kann z.B. ein beliebiges Fernsprechendgerät aus der Mehrzahl der insgesamt angeschlossenen Fernsprechendgeräte sein. Die Anreize, die am ersten Endgerät erfolgen, können dann beispielsweise unmittelbar zum Aufruf eines die Benutzungsoberfläche repräsentierenden Programmbausteins des zweiten Endgerätes führen. Nur mit Bezug auf diese unmittelbare "Umlenkung" der zu verarbeitenden Informationen bei Aufruf des dem zweiten Endgerät zuzuordnenden Programmbausteins BOF-FEy ist eine zusätzliche Prozedur zu implementieren, während ansonsten die bereits im System vorhandenen Prozeduren genutzt werden. Die Inanspruchnahme des "Fernsteuerungsmodus" ist unabhängig von der Art der Schnittstelle, über die die betreffenden Endgeräte, insbesondere Fernsprechendgeräte, an das System angeschlossen sind.

Bei dem im Zusammenhang mit dem variablen Einstieg in den "Fernsteuerungsmodus" gewählten Beispiel der unmittelbaren "Umlenkung" der Informationen an den benutzungsoberflächenrelevanten Baustein BOF-FE, ist eine übereinstimmende Benutzungsoberfläche der Partner-Endgeräte notwendig.

Die bestimmte Informationseingabe am ersten Endgerät kann auch eine Option einer im Zusammenhang mit der Bedienerführung auf der Anzeigeeinrichtung dieses Endgerätes anzeigbaren Menüleiste darstellen, wobei dann diese Option durch die entsprechende Bestätigungsinformation des Benutzers initiierbar ist. Das spezielle Endekriterium zur Beendigung des "Fernsteuerungsmodus" kann in unterschiedlicher Weise abgegeben werden. Das Auflegen des Handapparates oder die Anzeige als Option in einer anzeigbaren Menüleiste und das sogenannte "Timeout" sind solche Möglichkeiten.

Gemäß einer Weiterbildung der Erfindung werden die im Zusammenhang mit der Initiierung der Verbindungsaufbau- und/oder Leistungsmerkmalrelevanten Prozedurabläufe vorgesehenen optischen Anzeigen und die Aktivierung von zusätzlich vorhandenen Einheiten am ausgewählten zweiten Endgerät durch die Systemsteuerung veranlaßt. So erfolgt beispielsweise die Ansteuerung einer Anzeigeeinrichtung und/oder die Ansteuerung des Lautsprechers am zweiten Endgerät in der gleichen Weise, als ob die Prozedur an diesem zweiten Endgerät selbst eingegeben wird. Es wird also beispielsweise automatisch das Endgerät in den Freisprechmodus gesteuert, sofern dieses Leistungsmerkmal für das betreffende Endgerät vorgesehen ist.

Weitere vorteilhafte Ausgestaltungen der Erfindung sind den restlichen Unteransprüchen zu entnehmen.

Die Erfindung wird im folgenden anhand eines figürlich dargestellten Ausführungsbeispiels erläutert. In der FIG ist die Struktur eines digitalen Kommunikationssystems schematisch dargestellt. Es sind lediglich die zum Verständnis der Erfindung notwendigen Komponenten gezeigt.

Zentraler Bestandteil des Kommunikationssystems KS, das ein sog. Nebenstellen-Kommunikationssystem darstellt ist ein zentrales Koppelfeld KF, über das Endgeräte - von denen die Fernsprechendgeräte FE1 und FEx schematisch angedeutet sind - miteinander bzw. mit zu einem öffentlichen Kommunikationssystem ÖN führenden Leitungen AL verbindbar sind. Das zentrale Koppelfeld KF steht unter dem Steuereinfluß einer zentralen Anlagensteuerung AST, die neben dem Zentralprozessor CPU eine Speichereinrichtung SPE und eine Takteinheit TG enthält. Der Zentralprozessor steuert sämtliche Vermittlungsvorgänge und besorgt eine Aufbereitung und Zuteilung der Steuerdaten. Diese Aufgaben können auch auf mehrere Prozessoren aufgeteilt werden.

Im Kommunikationssystem KS sind Leitungsanschlußeinrichtungen, symbolisiert durch die Leitungsanschlußeinrichtung LT angeordnet. Diese enthalten jeweils Teilnehmeranschlußmodule SLM. Diese Teilnehmeranschlußmodule sind über Teilnehmeranschlußleitungen ASL jeweils mit einem der Kommunikationsendgeräte FE bis FEx verbunden, wobei grundsätzlich unterschiedliche Teilnehmeranschlußmodule vorgesehen sein können. Dies sind zum einen Teilnehmeranschlußmodule für den Anschluß analoger Kommunikationsendgeräte und zum anderem Teilnehmeranschlußmodule für den Anschluß unterschiedlich strukturierter digitaler Kommunikationsendgeräte. Ein solches digitales Teilnehmeranschlußmodul ist für den Anschluß einer ganz bestimmten Anzahl von digitalen Kommunikationsendgeräten vorgesehen. Die Nachrichtenübertragung erfolgt hierbei z.B. über Nachrichtenkanäle N und die Signalisierung wird über einen zusätzlichen Kanal S übermittelt. Die vom Kommunikationsendgerät z.B. FE übermittelten digitalen Sprachinformationen werden ebenfalls über eine Multiplex-Einrichtung MUX zum Koppelfeld KF weitergegeben. Vermittlungstechnisch gesteuert werden die Leitungsanschlußeinrichtungen LT von der Systemsteuerung AST. Hierbei ist jede Leitungsanschluß-Einrichtung über einen Signalisierungskanal SK mit der Systemsteuerung AST verbunden. Über diesen Signalisierungskanal SK werden die Informationen mit Hilfe der bekannten HDLC-Übermittlungsprozedur ausgetauscht. Die in der Systemsteuerung gebildeten Taktsignale werden über eine Taktleitung TL an die Leitungsanschluß-Eihrichtungen LT verteilt. Das Zurverfügungstellen der Taktsignale ist durch die Einheit TG symbolisiert.

Der Zugriff zu einer Amtsleitung AL über die, ggf. als eine von mehreren - das Kommunikationssystem KS beispielsweise mit dem öffentlichen Netz ÖN verbunden ist, erfolgt über die Schnittstelle LS. Diese Schnittstelle beinhaltet beispielsweise einen ISDN-Teil, der z.B. als standardisierte SO-Schnittstelle ausgebildet sein kann. Die Peripherie des Kommunikationssystems wird ergänzt durch eine Signalisierungseinheit SE, die zur Zeichenversorgung des Kommunikationssystems vorhanden ist.

Der zentrale Prozessor CPU der Systemsteuerung AST hat Zugriff zu den in der Speichereinrichtung SPE abgelegten Daten. Sie besteht grundsätzlich aus den Speicherteilen PROM und RAM. In dem Programmspeicherteil PROM ist das Anlagenbetriebsprogramm und die zu ihm bezüglich der Peripherietechnik, der Betriebstechnik, der Sicherheitstechnik und der Vermittlungstechnik gehörenden Programme abgespeichert. Dies ist bezüglich der Vermittlungstechnik durch das Modul VT angedeutet. Mit LM ist ein Modul bezeichnet, daß symbolisch für die zur Realisierung der einzelnen Leistungsmerkmale vorhandenen Programmodule steht. Durch die Programmkomponente BOF wird die sog. Benutzeroberfläche gesteuert. Dieses Programmodul beinhaltet unterschiedliche Prozeduren.

In dem Speicherteil RAM ist als Teileinheit der Datenbasis der Speicherbereich KD angedeutet. In diesem sind die Kundendaten, wie z.B. die den einzelnen Endgeräten FE zugeteilten Berechtigungen und die Systemkonfiguration abgelegt. In dem Teilbereich SYS sollen die systembezogenen Daten enthalten sein. Der Speicherteil RAM dient u.a. der Aufnahme von temporären Daten zur Programmablaufsteuerung. Es werden in ihm auch Daten übernommen, die während eines durch ein Kommunikationsendgerät initiierten Verbindungsaufbaus oder bei der Inanspruchnahme eines Dienstes bzw. eines Leistungsmerkmales abgefragt werden. In dem Speicherbereich FD ist jedem Endgerät ein Speicherabschnitt zugeteilt, in dem sämtliche endgerätebezogenen Daten abgelegt sind. Es ist also daraus der aktuelle vermittlungstechnische Zustand, beispielsweise ob der betreffende Teilnehmer den Handapparat abgehoben hat, ob er gerufen wird usw., als Speicherinformation entnehmbar. In jedem dieser Speicherabschnitte - gezeigt ist lediglich der Speicherabschnitt FE1-D für das Endgerät FE und der Speicherabschnitt FEx-D für das Endgerät FEx - werden Informationen abgespeichert, die die in Anspruch zu nehmenden Leistungsmerkmale oder auch die bereits beanspruchten Leistungsmerkmale betreffen. Sie sind also jeweils als dynamische Datenbasis für die einzelnen Endgeräte anzusehen. In dem Speicherbereich FD sind endgerätebezogen beispielsweise auch Kennungen für das durch die jeweilige Benutzereingabe oder für das durch die vermittlungstechnischen Abläufe jeweils angeforderte Menü enthalten. Eine derartige Menüleiste wird dann auf der Anzeigeeinrichtung, die z.B. in Form eines alphanumerischen Displays DL realisiert ist, angeboten. Das darstellende Menü beinhaltet einen Satz von Optionen, wobei diese einzelnen Optionen durch die Komponente "Benutzungsoberfläche" BOF für die Darstellung auf dem Display aufbereitet werden. Der Benutzer hat die Möglichkeit beispielsweise durch die Betätigung einer Folgetaste FT sich die nächste Option anzeigen zu lassen oder eine angezeigte Option durch die Betätigung einer Bestätigungstaste BT zu aktivieren.

Es besteht für die Kommunikationsendgeräte - entweder für alle Kommunikationsendgeräte oder für bestimmte, als hierzu berechtigt ausgewählte Kommunikationsendgeräte - die Möglichkeit, einen Betriebsmodus einzunehmen, in dem das betreffende Kommunikationsendgerät für ein anderes zu spezifizierendes Endgerät bestimmte Funktionen, Leistungsmerkmale und Dienste ausführen bzw. initiieren kann. Dieser besondere Zustand wird nicht durch einen Eintrag in einem Speicher, beispielsweise dem Kundendatenspeicher, manifestiert, sondern er kann temporär eingenommen werden. Während eines solchen Zeitraums besteht also für das betreffende Endgerät die Möglichkeit, für ein anderes Endgerät im Sinne einer "Fernsteuerung" tätig zu werden. Der Einstieg in diesen Fernsteuerungsmodus zur Ausführung von Prozeduren für ein anderes Endgerät tritt beispielsweise durch Eingabe einer vorgegebenen Aktivierungskennzahl ein. Eine andere Möglichkeit besteht in der Auswahl eines entsprechenden Menüpunktes einer z.B. auf der Anzeigeeinrichtung des betreffenden Endgerätes darstellbaren Menüleiste. Es werden dabei die im Kommunikationssystem vorhandenen Prozeduren, die die vom Teilnehmergerät ausgehenden Informationen behandeln und verarbeiten, zum Ablauf gebracht. Zur Kennzeichnung des fernzusteuernden Kommunikationsendgerätes, beispielsweise des Endgerätes FEx, wird seine interne Rufnummer durch den Benutzer des Endgerätes, z.B. des Endgerätes FE1, das in diesen Sonderbetriebsmodus eingetreten ist, eingegeben. Dessen Kennung ist in dem diesem Endgerät FE zugeordneten Speicherabschnitt FE-D des Speichers FD eingeschrieben. Die Softwarekomponente Benutzungsoberfläche BOF empfängt über die Komponente Device Handler DH Tastenbetätigungen von der Peripherie. Nach Erkennen der Information, daß das Leistungsmerkmal "Fernsteuerung" in Anspruch genommen wird, d.h. z.B. nach Auswertung der über das Fernsprechendgerät FE eingegebenen Aktivierungskennzahl und nach der Erkennung des fernzusteuernden Endgerätes, z.B. FEx, leitet als eine mögliche Ausführungsform die der Endeinrichtung FE1 zugeordnete Task der Benutzungsoberfläche BOF-FE1 die im folgenden empfangenen Anreize an die Task des Kommunikationsendgerätes BOF-FEx weiter. Es wird also in diesem ausgewählten Beispiel durch einen Anreiz ein Durchlauf eines Programmbausteines, z.B. BOF, mit den aktuellen RAM-Daten eines bestimmten Endgerätes, z.B. des Endgerätes FE1, initiiert. Die von den an eine bestimmte Endgeräteart angepaßten Programmodulen DH aufgenommenen Anreize werden in bestimmter Weise behandelt. Der Informationsaustausch zwischen dieser angedeuteten Leitungstechnik-Strukturebene DH und der Vermittlungstechnik-Strukturebene VT erfolgt mittels definierter Meldungen, die beispielsweise über eine nicht dargestellte Software-Busstruktur übertragen werden. Die Programmkomponente DH erzeugt ausgehend von den empfangenen Anreizen logische Tastendrücke, die als in einem vorgegebenen Protokoll verschlüsselte Meldungen M an die Softwarekomponenten BOF übergeben werden und entsprechend verarbeitbar sind. Durch bestimmte Mechanismen in einem vorausgesetzten zustandsanreizgesteuerten System wird die Benutzungsoberfläche-Komponente in der Weise für die Endgeräte zur Verfügung gestellt, daß sie von mehreren Endgeräten parallel durchlaufen werden können. In Abhängigkeit davon, welches Kommunikationsendgerät FE die Prozedur der "Fernsteuerung" einleitet, wird ein unterschiedlicher Taskindex zugeordnet und damit der parallele Zugriff mehrerer Endgeräte FE ermöglicht.

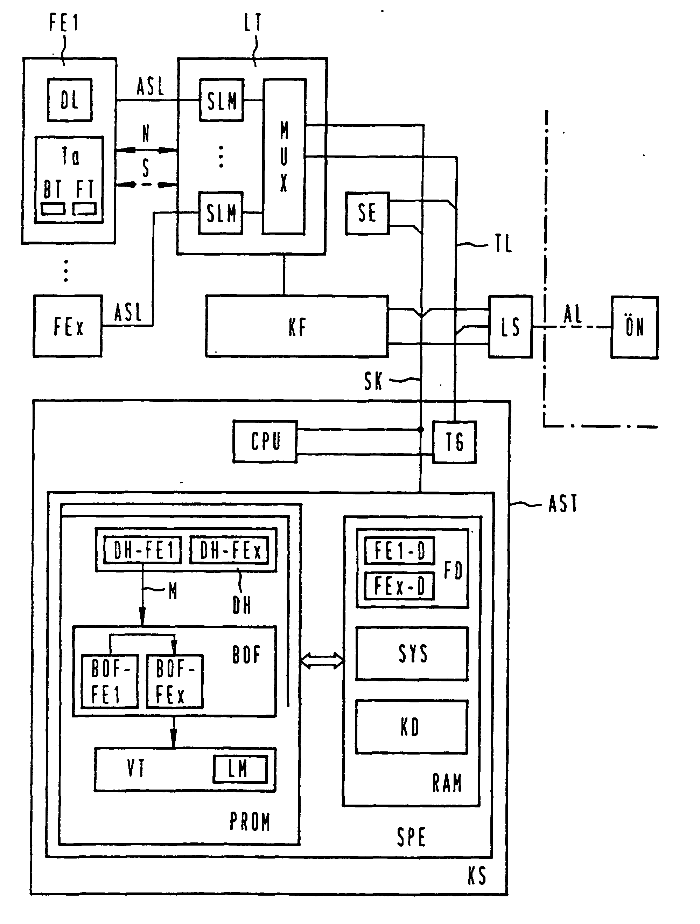

Erhält der Programmbaustein BOF einen Tastaturanreiz in Form der Meldung M von dem Programmodul DH-FE1 für das Endgerät FE1, so wird entsprechend der RAM-Daten für das Endgerät FE für die Task des Endgerätes FE ein Zustandsübergang durchgeführt. Es werden also die auf das Endgerät FE1 bezogenen RAM-Daten geändert. Danach ist z.B. die Eingabeprozedur im Programmbaustein BOF-FE1 für die Aktivierung des "Fernsteuermodus" in einem neuen Zustand, der beispielsweise den Zustand "Eingabe der Partner-Rufnummer vollständig" repräsentiert. Die Rufnummer des Partnerendgerätes, für das eine Prozedur durchgeführt werden soll, ist dann in den Datenbereich SYS oder in dem Speicherabschnitt FE1-D des Datenbereiches FD abgelegt. Alle weiteren, von der Tastatur Ta ausgehenden Anreize werden bis zum Abbruch der Prozedur, der z.B. durch Trennen erfolgen kann, in der Weise verarbeitet, daß sie den Programmbaustein BOF mit den auf das Endgerät FEx bezogenen Daten durchlaufen. Dies ist durch den von dem Baustein BOF-FE1 ausgehenden und zu dem Baustein BOF-FEx hinweisenden Pfeil symbolisch in der Zeichnung angedeutet. Die empfangenen Anreize werden durch die Benutzungsoberfläche BOF so interpretiert, als seien sie von der dem Endgerät FEx zugeordneten Programmkomponente DH-FEx, also unmittelbar von dem Endgerät FEx empfangen worden. Es wird also die gleiche Wirkung erzielt als seien die weiteren Tastatureingaben für das beim Endgerät FE1 ferngesteuert zu aktivierendes Leistungsmerkmal direkt am Endgerät FE1 eingegeben worden. Die Vermittlungstechnik VT unterscheidet in ihrer weiteren Verarbeitung des Anreizes nicht mehr, ob der betreffende Tastaturanreiz unmittelbar am Endgerät FEx oder "ferngesteuert" über die Tastatur des Endgerätes FE1 eingegeben wurde. Mit der Eingabe eines Abschlußkriteriums am Endgerät FE1 endet dann die Weiterleitung der Anreize über den "Quersendemechanismus" von der dem Endgerät FE1 zugeordneten Komponente der Benutzungsoberfläche zu der dem Endgerät FEx zugeordneten Komponente der Benutzungsoberfläche.

Bei dieser unmittelbaren Aktivierung desjenigen Programmbausteins, der die Benutzungsoberfläche des zweiten Endgeräts repräsentiert, werden für die "Partnerendgeräte" gleiche Benutzungsoberflächen vorausgesetzt.

Nach der Aktivierung des "Fernsteuermodus" ist es also unter Einbeziehung des entsprechendes Programmteils möglich, von einem Fernsprechendgerät aus, z.B. vom Fernsprechendgerät FE1 aus, für eine andere Endeinrichtung zu wählen. Dies könnte beispielsweise ein Endgerät sein, dessen Wähltastatur nicht bedient werden soll oder kann. Ein Beispiel hierfür wäre ein Endgerät in einer Telefonzelle, das keine Wähltastatur aufweist. Als ein weiteres Beispiel könnte von der Rezeption eines Hotels aus für einen Gast durch eine entsprechende Eingabe der Wahlinformation eine Verbindung aufgebaut werden. Es ist jedoch nicht nur eine gehende Wahl möglich, sondern es können auch Prozeduren für ein anderes Endgerät, beispielsweise das Endgerät eines Hotelgastes, ausgeführt werden. So kann beispielsweise der Anrufschutz bzw. die Anrufumleitung durch die Rezeption für den Gast eingerichtet werden. Auf dem Endgerät des Gastes kann dann eine entsprechende Textinformation auf dem Display erscheinen. Diese Ansteuerung des Displays erfolgt demnach in gleicher Weise als ob die Prozedur an dem Endgerät des Gastes selbst eingegeben wird. Weist ein solches Endgerät eine Freisprecheinrichtung auf, so erfolgt mit der abgehenden Wahl für das andere Endgerät die automatische Aktivierung des Freisprechmodus jeweils an diesem anderen Endgerät. Zwischen den jeweiligen Partnergeräten besteht keine feste Zuordnung, sondern es ist eine variable Lösung in dieser jeweiligen Zuordnung vorgesehen.

## Patentansprüche

1. Verfahren zur Verbesserung der Betriebsweise eines programmgesteuerten Kommunikationssystems (KS),
wobei eine Systemsteuerung (AST) zur Steuerung von Endgerätefunktionen sowie zur Steuerung von Leistungsmerkmalsfunktionen und zur Speicherung für anschlussbezogene Informationen verwendet wird,
wobei die an einem angeschlossenen Kommunikationsendgerät durch den Benutzer eingegebenen Informationen der Systemsteuerung übermittelt werden und diese daraufhin die Ausführung des jeweiligen Prozedurablaufes veranlasst,
wobei eine bestimmte Informationseingabe eines Benutzers eines ersten Kommunikationsendgerätes (FE1) die der Systemsteuerung (AST) übermittelt wird, diese veranlasst, diesem ersten Kommunikationsendgerät (FE1) temporär einen Sonderbetriebsmodus zuzuteilen,
wobei ein beliebiges zweites Kommunikationsendgerät (FEx) an dem ersten Kommunikationsendgerät (FE1) bestimmt wird,
**dadurch gekennzeichnet,**
**dass** die nach der internen Anwahl an dem ersten Kommunikationsendgerät (FE1) initiierten Prozedurabläufe als solche an dem zweiten Kommunikationsendgerät (FEx) initiierte Prozedurabläufe bewertet werden,
**dass** eine im Zusammenhang mit der Initiierung der Prozedurabläufe vorgesehene optische Anzeige und/oder eine Aktivierung einer zusätzlich vorhandenen Einheit am ausgewählten zweiten Kommunikationsendgerät durch die Systemsteuerung veranlasst werden, und
**dass** der Sonderbetriebsmodus des ersten Kommunikationsendgerätes (FE1) durch die Eingabe eines speziellen Endekriteriums beendet wird.

2. Verfahren nach Anspruch 1,
**dadurch gekennzeichnet,**
**daß** die bestimmte Informationseingabe zur Herstellung des Sonderbetriebsmodus durch die Einwahl einer hierfür repräsentativen Aktivierungskennzahl oder durch die Betätigung einer mit dieser Kennzahl unterlegten Funktionstaste vornehmbar ist.

3. Verfahren nach Anspruch 1,
**dadurch gekennzeichnet,**
**daß** die Informationseingabe eine Option einer im Zusammenhang mit der Bedienerführung auf der Anzeigeeinrichtung (Display DL) des ersten Kommunikationsendgerätes (FE1) anzeigbaren Menüleiste darstellt und durch die Bestätigungsinformation (Taste BT) des Benutzers initiierbar ist.

4. Verfahren nach einem der vorhergehenden Patentansprüche,
**dadurch gekennzeichnet,**
**daß** das Endekriterium durch das Auflegen des Handapparates oder einer damit korrespondierenden Handlung des Benutzers oder automatisch zeitgesteuert nach der letzten prozedurbezogenen Eingabe des Benutzers abgegeben wird.

5. Verfahren nach einem der Patentansprüche 1 oder 3,
**dadurch gekennzeichnet,**
**daß** das Endekriterium als Option einer im Zusammenhang mit der Bedienerführung auf der Anzeigeeinrichtung (DL) des ersten Kommunikationsendgerätes (FE1) anzeigbaren Menüleiste darstellbar und durch die Bestätigungsinformation des Benutzers initiierbar ist.

6. Verfahren nach einem der vorhergehenden Patentansprüche,
**dadurch gekennzeichnet,**
**dass** bei einer als zusätzliche Einheit vorhandenen Freisprecheinrichtung diese automatisch in den Freisprechmodus gesteuert wird.

7. Verfahren nach einem der vorhergehenden Patentansprüche,
**dadurch gekennzeichnet,**
**dass** die optische Anzeige in Form der Ansteuerung des Displayanzeigefeldes und/oder in Form der Ansteuerung von einzelnen Leuchtelementen des zweiten Endgerätes (FEx) in gleicher Weise wie bei der unmittelbaren Inanspruchnahme durch dieses Endgerät (FEx) selbst aktiviert werden.

8. Verfahren nach einem der vorhergehenden Ansprüche,
**dadurch gekennzeichnet,**
**dass** für die Inanspruchnahme des Sonderbetriebsmodus für das erste Endgerät (FE1) eine diesbezügliche Berechtigung zugeteilt ist.

9. Verfahren nach einem der vorhergehenden Patentansprüche,
**dadurch gekennzeichnet,**
**dass** durch eine Eingabe an dem ersten Kommunikationsendgerät (FE1) im Sonderbetriebsmodus eine von dem zweiten Kommunikationsendgerät (FEx) abgehende Kommunikationsverbindung initiiert wird.

10. Kommunikationssystem (KS) zur Durchführung des Verfahrens nach einem der Patentansprüche 1 bis 9,
mit einer Systemsteuerung (AST) aus zumindest einem Systemprozessor (CPU) und einem Systemspeicher (SPE), der für die im Kommunikationssystem (KS) ablaufenden vermittlungstechnischen Prozeduren Modulkomponenten zur Steuerung von Endgerätefunktionen sowie zur Steuerung von Leistungsmerkmalsfunktionen aufweist und zur Speicherung für anschlussbezogene Informationen dient, wobei die an einem angeschlossenen Kommunikationsendgerät (FE1, FEx) durch den Benutzer eingegebenen Informationen zu der Systemsteuerung (AST) übermittelbar sind und die Systemsteuerung zur anschließenden Ausführung des jeweiligen Prozedurablaufs eingerichtet ist,
wobei die Systemsteuerung zur Steuerung von optischen Anzeigen und/oder zur Aktivierung von zusätzlich vorhandenen Einheiten an den angeschlossenen Kommunikationsendgeräten (FEx) eingerichtet ist,
**dadurch gekennzeichnet,**
**dass** die Systemsteuerung (AST) zur Zuteilung eines Sonderbetriebsmodus zu einem ersten Kommunikationsendgerät (FE1) nach einer bestimmten Informationseingabe eines Benutzers an diesem ersten Kommunikationsendgerät (FE1) eingerichtet ist, wobei die Systemsteuerung (AST) zur Interpretation der im Sonderbetriebsmodus an dem ersten Kommunikationsendgerät (FE1) initiierten Verbindungsaufbau- und/oder leistungsmerkmalrelevanten Prozedurabläufe als solche eines durch eine interne Anwahl ausgewählten zweiten Kommunikationsendgerätes (FEx) ausgestaltet ist,
wobei die Systemsteuerung (AST) zur Steuerung der optischen Anzeigen und/oder zur Aktivierung der zusätzlich vorhandenen Einheiten am ausgewählten zweiten Kommunikationsendgerät (FEx) als Reaktion auf die an dem ersten Kommunikationsendgerät (FE1) initiierten Prozedurabläufe eingerichtet ist.

## Claims

1. Method for improving the operation of a programmable communication system (KS), with a system controller (AST) being used to control terminal functions and to control service feature functions as well as to store connection-related information, with the information which is entered by the user on a connected communication terminal being transmitted to the system controller which then causes the respective procedure to be carried out, with a specific information input by a user of a first communication terminal (FE1) which is transmitted to the system controller (AST) causing the latter to temporarily allocate a special operating mode to this first communication terminal (FE1),
with any desired second communication terminal (FEx) being determined at the first communication terminal (FE1),
**characterized**
**in that** the procedures which are initiated after the internal selection on the first communication terminal (FE1) being assessed as those procedures which are initiated on the second communication terminal (FEx),
**in that** a visual display, which is provided in conjunction with the initiation of the procedures, and/or activation of an additionally provided unit at the selected second communication terminal being initiated by the system controller, and
**in that** the special operating mode of the first communication terminal (FE1) is ended by inputting a specific end criterion.

2. Method according to Claim 1,
**characterized**
**in that** the specific information input for production of the special operating mode can be carried out by entering an activation identification number which is representative of this of an operation of a function key which is associated with this identification number.

3. Method according to Claim 1,
**characterized**
**in that** the information input represents an option from a menu bar, which can be displayed in conjunction with the operator guidance on the display device (DL) of the first communication terminal (FE1), and can be initiated by the confirmation information (key BT) from the user.

4. Method according to one of the preceding patent claims,
**characterized**
**in that** the end criterion is emitted by replacing the handset, by a user operation which corresponds to this, or on an automatically time-controlled basis after the last procedure-related input by the user.

5. Method according to one of patent Claims 1 or 3,
**characterized**
**in that** the end criterion can be displayed as an option on a menu bar, which can be displayed in conjunction with the operator guidance on the display device (DL) of the first communication terminal (FE1), and can be initiated by the confirmation information from the user.

6. Method according to one of the preceding patent claims,
**characterized**
**in that** a hands-free device which is provided as an additional unit is switched automatically to the hands-free mode.

7. Method according to one of the preceding patent claims,
**characterized**
**in that** the visual display, in the form of the driver for the display indication area and/or in the form of the drive for individual light elements on the second terminal (FEx) can be initiated by this terminal (FEx) itself in the same way as when it is started up directly.

8. Method according to one of the preceding claims,
**characterized**
**in that** an authorization relating to this is allocated for starting up the special operating mode for the first terminal (FE1).

9. Method according to one of the preceding patent claims,
**characterized**
**in that** a communication link which originates from the second communication terminal (FEx) is initiated by an input on the first communication terminal (FE1) in the special operating mode.

10. Communication system (KS) for carrying out the method according to one of patent claims 1 to 9,
having a system controller (AST) comprising at least one system processor (CPU) and one system memory (SPE), which has module components for controlling terminal functions and/or controlling service feature functions for the switching procedures which take place in the communication system (KS), and is used for storage for connection-related information, in which case the information which is entered by the user on a connected communication terminal (FE1, FEx) can be transmitted to the system controller (AST), and the system controller is designed to subsequently carry out the respective procedure,
in which case the system controller is designed to control visual displays and/or to activate additionally provided units at the connected communication terminal (FEx),
**characterized**
**in that** the system controller (AST) is designed to allocate a special operating mode to a first communication terminal (FE1) after a specific information input from a user at this first communication terminal (FE1), in which case the system controller (AST) is designed for interpretation of the connection setting-up and/or service-feature-relevant procedures, which are initiated at the first communication terminal (FE1) in the special operating mode, as those of a second communication terminal (FEx) which is selected by internal ???,
in which case the system controller (AST) is designed to control the visual displays and/or to activate the additionally provided units at the selected second communication terminal (FEx) as a reaction to the procedures initiated at the first communication terminal (FE1).

## Revendications

1. Procédé pour améliorer le mode de fonctionnement d'un système de communication commandé par programme (KS),
dans lequel une commande de système (AST) est utilisée pour la commande de fonctions de terminaux ainsi que pour la commande de fonctions de services et pour la mémorisation d'informations se rapportant à la connexion,
dans lequel les informations entrées par l'utilisateur sur un terminal de communication raccordé sont transmises à la commande de système qui provoque alors l'exécution de la procédure respective,
dans lequel une entrée d'information particulière d'un utilisateur d'un premier terminal de communication (FE1) qui est transmise à la commande de système (AST) fait en sorte que celle-ci attribue temporairement un mode de fonctionnement spécial à ce premier terminal de communication (FE1),
et dans lequel un deuxième terminal de communication quelconque (FEx) est spécifié sur le premier terminal de communication (FE1),
**caractérisé par le fait que**
les procédures déclenchées après la sélection interne sur le premier terminal de communication (FE1) sont considérées comme des procédures déclenchées sur le deuxième terminal de communication (FEx),
un affichage optique prévu en relation avec le déclenchement des procédures et/ou une activation d'une unité présente en plus sur le deuxième terminal de communication sélectionné sont provoqués par la commande de système, et
il est mis fin au mode de fonctionnement spécial du premier terminal de communication (FE1) par l'entrée d'un critère de fin spécial.

2. Procédé selon la revendication 1,
**caractérisé par le fait que** l'entrée d'information particulière pour l'établissement du mode de fonctionnement spécial peut être effectuée par la sélection d'un indicatif d'activation représentatif de celui-ci ou par l'actionnement d'une touche de fonction correspondant à cet indicatif.

3. Procédé selon la revendication 1,
**caractérisé par le fait que** l'entrée d'information représente une option d'une barre de menu affichable en relation avec le guide d'utilisateur sur le dispositif d'affichage (écran DL) du premier terminal de communication (FE1) et qu'elle peut être déclenchée par l'information de confirmation (touche BT) de l'utilisateur.

4. Procédé selon l'une des revendications précédentes,
**caractérisé par le fait que** le critère de fin est fourni par le raccrochage du combiné ou par une manipulation équivalente effectuée par l'utilisateur ou automatiquement, suivant une commande temporelle, après la dernière entrée de l'utilisateur qui se rapportait à la procédure.

5. Procédé selon l'une des revendications 1 ou 3,
**caractérisé par le fait que** le critère de fin peut être présenté comme une option d'une barre de menu affichable en relation avec le guide d'utilisateur sur le dispositif d'affichage (DL) du premier terminal de communication (FE1) et qu'il peut être déclenché par l'information de confirmation de l'utilisateur.

6. Procédé selon l'une des revendications précédentes,
**caractérisé par le fait que**, en présence d'un dispositif mains libres comme unité supplémentaire, celui-ci est commandé automatiquement dans le mode mains libres.

7. Procédé selon l'une des revendications précédentes,
**caractérisé par le fait que** l'affichage optique sous la forme de la commande du champ d'affichage sur écran et/ou sous la forme de la commande d'éléments électroluminescents individuels du deuxième terminal (FEx) est activé de la même manière que lors de la sollicitation directe par ce terminal (FEx) lui-même.

8. Procédé selon l'une des revendications précédentes,
**caractérisé par le fait que**, pour la sollicitation du mode de fonctionnement spécial pour le premier terminal (FE1), une autorisation à cet effet est attribuée.

9. Procédé selon l'une des revendications précédentes,
**caractérisé par le fait que**, par une entrée sur le premier terminal de communication (FE1) dans le mode de fonctionnement spécial, une liaison de communication partant du deuxième terminal de communication (FEx) est déclenchée.

10. Système de communication (KS) pour la mise en oeuvre du procédé selon l'une des revendications 1 à 9,
comportant une commande de système (AST) constituée d'au moins un processeur de système (CPU) et d'une mémoire de système (SPE), qui comporte pour les procédures techniques de commutation s'exécutant dans le système de communication (KS) des composants de modules pour la commande de fonctions de terminaux ainsi que pour la commande de fonctions de services et qui sert à la mémorisation d'informations se rapportant à la connexion, les informations entrées par l'utilisateur sur un terminal de communication raccordé (FE1, FEx) pouvant être transmises à la commande de système (AST) et la commande de système étant prévue pour l'exécution consécutive de la procédure respective,
la commande de système étant prévue pour la commande d'affichages optiques et/ou pour l'activation d'unités présentes en plus sur les terminaux de communication (FEx) raccordés,
**caractérisé par le fait que**
la commande de système (AST) est prévue pour l'attribution d'un mode de fonctionnement spécial à un premier terminal de communication (FE1) après une entrée d'information particulière d'un utilisateur sur ce premier terminal de communication (FE1), la commande de système (AST) étant conçue pour l'interprétation des procédures d'établissement de liaison et/ou de réalisation de service déclenchées dans le mode de fonctionnement spécial sur le premier terminal de communication (FE1) comme des procédures d'un deuxième terminal de communication (FEx) sélectionné par une sélection interne,
la commande de système (AST) étant prévue pour la commande des affichages optiques et/ou pour l'activation des unités présentes en plus sur le deuxième terminal de communication sélectionné (FEx) en réaction aux procédures déclenchées sur le premier terminal de communication (FE1).
